# EUROPEAN PATENT SPECIFICATION

(11) **EP 4 156 316 B1**
(45) Date of publication and mention of the grant of the patent: **25.06.2025**
(21) Application number: 22195523.0
(22) Date of filing: 14.09.2022
(51) Int. Cl.: H01M 10/0585, H01M 50/474, H01M 50/491, H01M 10/04, H01M 4/02

(54) **ELECTRODE ASSEMBLY AND BATTERY CELL INCLUDING THE SAME**
ELEKTRODENANORDNUNG UND BATTERIEZELLE DAMIT
ENSEMBLE ÉLECTRODE ET ÉLÉMENT DE BATTERIE LE COMPRENANT

(30) Priority: 27.09.2021 KR 20210127163; 08.09.2022 KR 20220114320
(43) Date of publication of application: 29.03.2023
(73) Proprietor: LG Energy Solution, Ltd., Seoul 07335 (KR)
(72) Inventor: CHOI, Seong Won, 34122 Daejeon (KR); JUNG, Su Taek, 34122 Daejeon (KR); JEONG, Hyeok, 34122 Daejeon (KR); KWON, Soon Kwan, 34122 Daejeon (KR); BAE, Sangho, 34122 Daejeon (KR); LEE, Yong Jun, 34122 Daejeon (KR)
(74) Representative: Goddar, Heinz J.

(56) References cited:
- EP-B1- 2 874 225
- US-A1- 2008 305 398
- US-A1- 2015 357 671
- US-A1- 2016 218 395
- US-A1- 2020 161 617

## Description

### [TECHNICAL FIELD]

The present disclosure relates to an electrode assembly and a battery cell including the same, and more particularly, an electrode assembly that prevents the folding phenomenon of the separator, and a battery cell including the same.

### [BACKGROUND]

In modern society, as portable devices such as mobile phones, notebook computers, camcorders and digital cameras are used daily, the development of technologies in the fields related to such mobile devices has been substantial. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for improvements of secondary batteries.

Currently commercialized secondary batteries include nickel cadmium batteries, nickel hydrogen batteries, nickel zinc batteries, and lithium secondary batteries. Of these, the lithium secondary battery has come into the spotlight because of its advantages, for example, hardly exhibiting memory effects compared to nickel-based secondary batteries and so that it may be freely charged and discharged, and for having very low self-discharge rate and high energy density.

Secondary batteries may be according to the shape of a battery case into a cylindrical battery having an electrode assembly mounted in a cylindrical metal can, a prismatic battery having an electrode assembly mounted in a prismatic metal can, and a pouch type battery having an electrode assembly mounted in a pouch-shaped case made of a laminated aluminum sheet.

Further, secondary batteries may be classified according to the structure of an electrode assembly having a structure in which a cathode and an anode are stacked with a separator being interposed between the cathode and the anode. Typically, they may be designated as a jelly-roll (wound) type structure in which a long sheet type cathode and a long sheet type anode are wound with a separator being interposed between the cathode and the anode, as a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly.

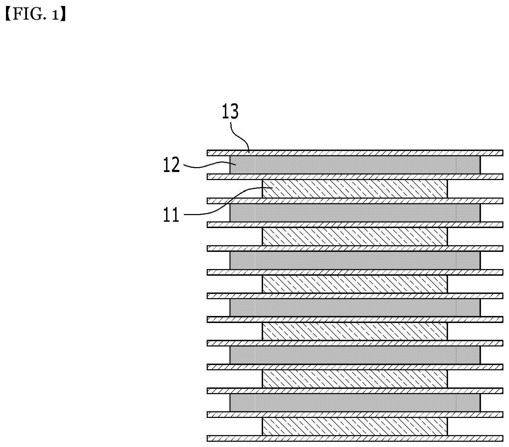

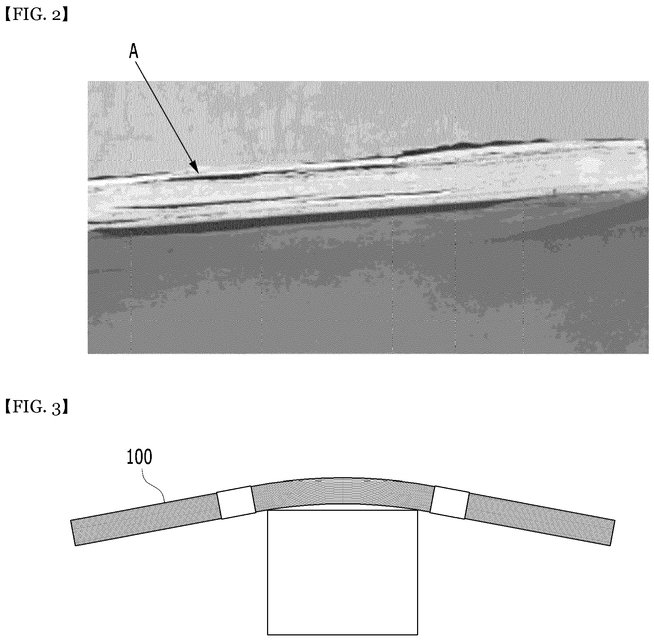

Fig. 1 is a side view of a conventional electrode assembly. Fig. 2 is a photograph that has been taken from a side surface of a conventional electrode assembly. Fig. 3 is a diagram that illustrates a test related to the stiffness of a conventional electrode assembly.

Referring to Fig. 1, the electrode assembly is a stacked type electrode assembly, and is formed by stacking unit cells in which a cathode 11, a separator 13, an anode 12 and a separator 13 are mainly stacked, or an anode 12, a cathode 11 and a separator 13 are sequentially stacked.

Meanwhile, since the separator 13 is usually formed larger than the cathode 11 or the anode 12, the end of the separator 13 in the electrode assembly is present in a state of not being adhered to the cathode 11 or the anode 12, which may cause a problem that the end of the separator 13 is folded by an external force as in a region A of Fig. 2. Further, as shown in Fig. 3, when an uneven force is applied to the electrode assembly, the overall stiffness of the electrode assembly may be deteriorated, such as being easily bent. In particular, this problem may occur more prominently on the long side of the separator 13 than on the short side.

US2020161617A1 is a patent application that refers to a plurality of stacked positive and negative electrodes; and plurality of separators between the positive and negative electrodes, where the separators protrude from the positive and negative electrodes and are stacked such that first surfaces at edges thereof face each other; and a fixing member including an adhesive layer adhered to the first surfaces of the separators that are facing each other. The document teaches that the fixing member may be formed at a regular interval along an edge of the separator to facilitate penetration of an electrolyte solution into the electrode assembly.

### [Technical Problem]

It is an object of the present invention to provide an electrode assembly that improves a separator folding phenomenon of the electrode assembly and enhances the overall stiffness, and a battery cell including the same, while a desired electrolyte infiltration is still facilitated.

The scope of the invention is defined by appended claim 1.

### [Technical Solution]

According to the present disclosure, an electrode assembly is provided, preferably for a battery cell. In the electrode assembly, electrodes, in particular electrode sheets, and separators, in particular separator sheets, are alternately stacked in a stacking direction. In at least one lengthwise and/or crosswise direction of the electrode assembly, the separators have a larger extension than the electrode. In particular, the separators have a larger extension into at least one of the lengthwise and/or crosswise direction in comparison to their immediately adjacent electrode (particularly in case of the lower- or topmost separator which may have only one adjacent electrode) or electrodes.

The crosswise direction may generally refer to a direction crosswise, in particular perpendicular, with respect to the lengthwise direction. The stacking direction or stack height direction may preferably be defined crosswise, preferably perpendicular, with respect to the crosswise direction and crosswise, preferably perpendicular, with respect to the lengthwise direction.

The multiple electrodes of the electrode assembly may optionally be of uniform size in the lengthwise and/or crosswise direction. In some embodiments, the electrodes may include a first group of electrodes and a second group of electrodes, wherein the first group of electrodes is larger than the second group of electrodes in the lengthwise and/or crosswise direction, wherein the separators have a larger extension into at least one of the lengthwise and/or crosswise direction, preferably in the crosswise direction, in comparison to the first group of electrodes. The first group of electrodes and the second group of electrodes may comprise anodes and/or cathodes. The first group of electrodes may consist of anodes. The second group of electrodes may consist of cathodes.

The separators, preferably each, include at least one projection that protrudes beyond the electrode in the lengthwise and/or crosswise direction, preferably in the crosswise direction. Preferably, the projections realize the larger extension of the separators. The separators, in particular each, may comprise a first projection extending in the crosswise direction on a first side, for example on the left side, and/or a second projection extending in the crosswise direction on a second side, for example on the right side. The first side and the second side preferably face mutually opposite directions. A projection of a separator protruding in the crosswise direction preferably extends along the entire extension of the separator in the lengthwise direction. A projection of a separator protruding in the lengthwise direction preferably extends along the entire extension of the separator in the crosswise direction.

According to the invention, the electrode assembly comprises at least one fixing member having a web structure is arranged among a plurality of the separators. The at least one fixing member is attached to the projections of the separators adjacent to each other along the stacking direction. In particular, in an electrode assembly having at least one side on which projections of multiple separators protrude, the fixing member is attached to all of them. Preferably, the electrode member comprises a first fixing member attached to first projections extending on a first side of the electrode assembly, and a second fixing member attached to second projections extending on a second side of the electrode assembly. The fixing member may include or consist of a polymer material, in particular a duroplast material and/or a rubber material. The fixing member may in particular include or consist of PO, PUR, EVO, rubber, or a mixture, a blend, a copolymer thereof. The fixing member may comprise or consist of an adhesive member. A fixing member may be adapted to from a bond or connection with the separators, in particular an adhesion connection and/or a cohesion connection. Preferably, the fixing member is configured to provide a structural reinforcement to the electrode assembly. Alternatively or additionally, the fixing member is configured realize a brace for the electrode assembly. In a preferred embodiment in which electrodes and separators are realized as sheets, the separator sheet may have generally the same shape but a larger size in the lengthwise and/or crosswise direction, wherein the size difference defines the projections. In other words, separator sheets may define a first area larger than a second area defined by the electrode sheets, wherein projections are defined by the area of the separator sheets protruding from the area of the adjacent electrode sheets.

Electrodes comprise cathodes and anodes. The number of cathodes and anodes in the electrode assembly may be equal or differ, for example differ by one. The number of separators in the electrode assembly may be substantially equal to the number of electrodes or larger, for example larger by one or two. A separator may be arranged between two electrodes, an anode and a cathode, to keeps the adjacent electrodes apart so as to prevent electrical short circuits and/or to allow the transport of ionic charge carriers, such as an electrolyte solution between the adjacent electrodes.

Electrode assemblies of the stacked (laminated) type and electrode assemblies of the stacked/folded type typically include electrode sheets and separator sheets. A stack may generally be understood to comprise of multiple separators and electrodes alternately layered (or: stacked) above one another. Preferably, alternately stacked electrodes and separators in the electrode assembly are stacked, preferably directly above one another, in the order: separator - cathode - anode - separator - cathode - anode ... separator. The term sheet designates a generally planar structure, particularly having a lengthwise dimension and a crosswise direction, both of which are substantially, such as at least 10 times, in particular at least 20 times, more particularly at least 50 times or 100 times, larger than the height dimension of the sheet. A sheet may have equally or similarly large crosswise and lengthwise dimensions. In particular, the lengthwise direction of a sheet may be no less than 1/10, more particularly no less than 1/5, preferably no less than 1/3, and/or no more than 10 times, more particularly no more than 5 times, preferably no more than 3 times of the crosswise direction of the sheet. In a stacked/folded type electrode assembly, sheets, in particular separator sheets, may be shaped, preferably by folding, into a zig-zag shape. In this case, it shall be understood that the term "sheet" shall I the context of the present disclosure be understood to relate to a respective layer of composite sheet having multiple sheet-like layers (sheet sections) connected by bend sections or pillar sections extending in the stacking direction between successive sheet sections. A zigzag structure may extend over essentially the entire height of the electrode assembly in the stack height direction.

In particular there may be provided an electrode assembly in which an electrode and a separator sheet are alternately stacked, wherein in one direction of the electrode assembly, the separator has a longer structure than the electrode, whereby the separator includes an projection that protrudes beyond the end part of the electrode, and wherein among a plurality of separators included in the electrode assembly, an fixing member for fixing between the projections of the separators adjacent to each other along a stacking direction of the electrode and the separator is formed. A projection may alternatively be designated as an extension part.

According to the invention the fixing member has a web structure comprising at least one line. A web structure may be realized completely or at least partially as a mesh structure, net structure, tangle structure, fleece structure and/or pattern structure. The web structure preferably comprises several lines. The line or lines each consist of a plurality of line sections. The at least one line may be continuously straight or curved. The at least one line may include straight line sections and/or curved line sections. The fixing member may in particular have a web structure comprising a plurality of lines. The plurality of lines may have substantially the same shape or different shapes. The line or lines may preferably be pigtail-shaped. The web structure comprises at least one of intersection formed by line sections. The web structure preferably comprises a plurality of intersection formed by line sections. An intersection generally designates a place where two or more lines overlap or coincide. In particular, the fixing member may have a pattern shape in which at least two lines intersect.

In one embodiment of the electrode assembly, the lines of the web structure have a line width. The line width may be at least 10 µm, in particular at least 20 µm. The line width may be no more than 200 µm, in particular no more than 100 µm. A preferred line width may be approximately 50 µm. Preferably, the line width may designate a mean line width of a line section, more preferably of a line. Alternatively or additionally, the web structure may have distance between mutually adjacent lines of the web structure is at least 100 µm and/or no more than 800 µm. In particular, the web structure has a line width of 20 to 100 µm. Preferably, the distance between mutually adjacent lines may be understood to define the largest distance between those lines. In particular, the distance between mutually adjacent lines of the web structure may be 100 to 800 µm.

Additionally or alternatively, in one embodiment of the electrode assembly, the fixing member includes a plurality of openings. The fixing member may include at least 10, in particular at least 100, preferably at least 1000, openings per cm² electrode assembly surface area covered by the fixing member. Preferably, the openings are configured to allow for electrolyte solution to flow through the fixing member. The openings are preferably relatively small. The openings may be smaller than 5 times the thickness of the fixing member, in particular smaller than 2 times the thickness of the fixing member, preferably smaller than the thickness of the fixing member. In particular the openings define a clearance. In a web structure, the clearance may be defined by a distance between mutually adjacent lines. Optionally, the openings may have a minimum clearance of no less than 10 µm. The clearance may be no more than 1000 µm, in particular no more than 800 µm, preferably no more than 400 µm. In particular, the fixing member may include a web structure having a plurality of openings.

In one embodiment, the electrode assembly has a first, in particular lengthwise, dimension larger than a second, in particular crosswise, dimension, and a side surface defined in the stack height direction and the first direction. The side surface may be a right side surface or a left side surface. Preferably, a left side surface may be provided with a first fixing member and a right side surface may be provided with a second fixing member. The fixing member covers the side surface at least partially, preferably completely, in the stack height direction. Alternatively or additionally, the fixing member covers the side surface at least partially, preferably completely, in the first direction. It may be preferred, that the fixing member covers the side surface completely in the stack height direction and at least partially in the first direction. Preferably, the electrode assembly has a cuboid shape. The top and/or bottom surface of a cuboid shape electrode assembly is preferably defined by a separator, in particular a separator sheet. The front surface and/or back surface of the cuboid shape electrode assembly may be at least sectionally or completely free of a fixing member. The right and/or left side surface of the cuboid shape electrode assembly may be provided with at least one respective fixing member. The first direction may alternatively be called a "whole length direction". In particular, the fixing member may be formed by partially applying an adhesive along the whole length direction of the electrode assembly.

In a further development, the electrode assembly includes at least two electrode tabs protruding from the electrodes in the first direction. The at least two electrode tabs preferably include at least one cathode tab and at least one anode tab. The at least two electrode tabs may include a plurality of cathode tabs and/or anode tabs. The at least two electrode tabs may protrude in the same direction, forward or backward, from the electrodes. Alternatively, the at least two electrode tabs may protrude from the electrodes in different, preferably opposite directions. The protruding electrode tabs may be arranged on a front and/or back surface of the electrode assembly completely covered by a fixing member, sectionally covered by a fixing member or free of a fixing member. In particular, the electrode assembly further includes an electrode tab protruding from one end part of the electrode, wherein the whole length direction may be the same as a direction in which the electrode tab protrudes.

According to a preferred embodiment, the separator has a zigzag shape. The zigzag shape may include two or more sheets (sheet sections) and wall sections connecting adjacent sheets. In particular, the separator may have a zigzag shape formed by bending a rectangular sheet.

In one embodiment of a separator assembly, the fixing member has an inside facing towards the electrodes and an outside facing away from the electrodes. The electrode assembly further comprises a finishing separator located on the outside of the fixing member, wherein preferably the finishing separator is attached to the outside of the fixing member. A finishing separator may be a separator beginning at a topmost or lowermost separator of the electrode assembly and enveloping at least one side surface, preferably two mutually opposite side surfaces, at least once. The finishing separator may wrap around the electrode structure, particularly in a spiral-like manner as seen in the first direction of the electrode assembly. The finishing separator may cover the top-, bottom-, left side and right side surface of the electrode assembly completely or at least partially. The finishing separator and may wrap the side surface of the cell stack on which the fixing member is formed. At this time, the finishing separator may be finished after surrounding one circle around the cell stack as a whole, and thus wrapping the side surface of the cell stack once. The finishing separators and the fixing member may be firmly attached to each other, Thereby, the overall stiffness of the electrode assembly can be further improved. A finishing separator may be located on the outside of the fixing member.

According to one embodiment of the electrode assembly, the separators, in particular the separator sheets, have mutually opposite first, in particular lengthwise, edges and mutually opposite second, in particular crosswise, edges, wherein the first edges are longer than the second edges. At least one edge, in particular first edge, may be formed by the projection. Alternatively or additionally, at least one edge may be formed by a bent section or pillar section of a zigzag shaped composite separator. The fixing member is attached to separators adjacent to each other along the stacking direction along at least one of their respective first edges.
In particular, the separator has long sides facing each other and short sides facing each other, and the fixing member may be formed on the long side of the separator.

In one particular embodiment of the electrode assembly, the fixing member covers at least 25 %, in particular at least 50 %, preferably at least 70 % if one, in particular first and/or second, side surface. The fixing member may cover a whole, in particular first and/or second, side surface of the electrode assembly. Alternatively or additionally, the fixing member no more than 90%, preferably no more than 80%, of one, in particular first and/or second, side surface of the electrode assembly. In particular, the fixing member may be formed so as to cover 70 to 80% of one side surface of the electrode assembly. The fixing member covering the side surface entirely or in part may be provided with a multitude of openings having a clearance as described above. The electrode assembly may be provided with a singular or one-piece fixing member covering one respective electrode assembly side surface. In particular, of a surface area, in particular a side surface area, which is covered by the fixing member essentially completely, at least 50%, preferably at least 66% or at least 75%, and/or no more than 95%, preferably no more than 80% or 75%, of the covered area is free of openings. Experiments have shown a good balance between permeability and stiffness.

In one embodiment in which the electrode assembly includes electrodes comprising at least one cathode and at least one anode, the at least one cathode is distanced from the fixing member. Alternatively, the at least one anode is distanced from the fixing member. Optionally, all of the electrodes are distanced from the fixing member. The distance between an electrode and the fixing member may be designated as a space or gap. Such a gap is defined between the edge of a respective electrode, the separator projections adjacent thereto, and the fixing member attached to those projections. Gaps configured to be filled with an electrolyte solution may be provided for separating the electrodes from the fixing member or members of the electrode assembly in the crosswise and/or lengthwise direction. It may be preferred that the cathodes and/or anodes, preferably at least the cathodes, are distanced on either side from fixing members attached on opposite side surfaces of the electrode assembly. In particular, the electrode includes a cathode and an anode, and the end of the cathode may not come into contact with the fixing member.

According to a further embodiment of the electrode assembly that can be combined with the abovementioned ones, the fixing member has a thickness of at least 50 µm, in particular at least 100 µm or 200 µm, and/or no more than 1000 µm, in particular no more than 800 µm, preferably no more than 600 µm. It should be clear that the thickness of the fixing member relates to its extension perpendicular to the surface area it is attached to. Preferably, the thickness of the fixing member covering surface extending in the first direction and in the stacking direction may be defined in the second direction. In particular, the fixing member may have a thickness of 100 to 600 µm.

In one embodiment of the electrode assembly, that can be combined with the abovementioned ones, the fixing member covers the projections of the separators. The fixing member may for example be attached to the edges of the separators and the thickness of the fixing member extend outward from the edges. According to another example, the fixing member is attached to the projections so as to protrude both inwardly and outwardly from the surface defined by the separator edges. Preferably, the electrode assembly may comprise a battery case surrounding the electrode assembly, wherein a space is defined between the electrode assembly and the battery case, particularly in the second direction, wherein the thickness of the fixing member extends from the separators through said space, in particularly filling said space, such that the fixing member contacts the battery case.

According to an alternative embodiment, the fixing member is flush with the projections, in particular the edges, of the separators. In this embodiment, the fixing member is contained within the electrode assembly between the separators, particularly does not protrude outward of the separators.

The fixing member may comprise or consist of an adhesive member. The adhesive member may include a curable adhesive. The adhesive member may include a two-component or more-component adhesive. In particular, the adhesive member may be configured for of natural curing, moisture curing, UV curing, and the like. The adhesive member may preferably be realized as heat sealing member or adhesive tape member. Preferably, the adhesive member be made of at least one component that is not readily dissolved in the electrolytic solution of the battery cell.

According to another embodiment of the present disclosure, there is provided a battery cell comprising the above-mentioned electrode assembly. The battery cell including the electrode assembly may be of stacked (laminated) type structure. Alternatively, the battery cell includes an electrode assembly as described above, wherein the electrode assembly is realized as a stacked/folded type electrode.

### [Advantageous Effects]

According to the embodiments, the electrode assembly of the present disclosure and a battery cell including the same include fixing members applied to both ends of the electrode assembly, thereby capable of improving the separator folding phenomenon, and enhancing the overall stiffness.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a side view of a conventional electrode assembly;
Fig. 2 is a photograph that has been taken from a side surface of a conventional electrode assembly;
Fig. 3 is a diagram that illustrates a test related to the stiffness of a conventional electrode assembly;
Figs. 4 and 5 are diagrams showing an electrode assembly according to an embodiment of the present disclosure;
Fig. 6 is a photograph that has been taken from a side surface of the electrode assembly;
Fig. 7 is a diagram that illustrates a test related to the stiffness of the electrode assembly;
Fig. 8 is a view showing an example of a device for applying an adhesive to the electrode assembly and the applied adhesive;
Fig. 9 is a view illustrating an apparatus for applying an adhesive to an electrode assembly and another example of the applied adhesive;
Fig. 10 is a photograph comparing the adhesives applied using the devices of Figs. 8 and 9;
Fig. 11 is an enlarged photograph of a region B of Fig. 10;
Fig. 12 is a photograph of a test related to the wettability of the electrode assembly to which the processes of Figs. 8 and 9 are applied; and
Figs. 13 and 14 are diagrams showing an electrode assembly according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, a battery assembly according to an embodiment of the present disclosure will be described.

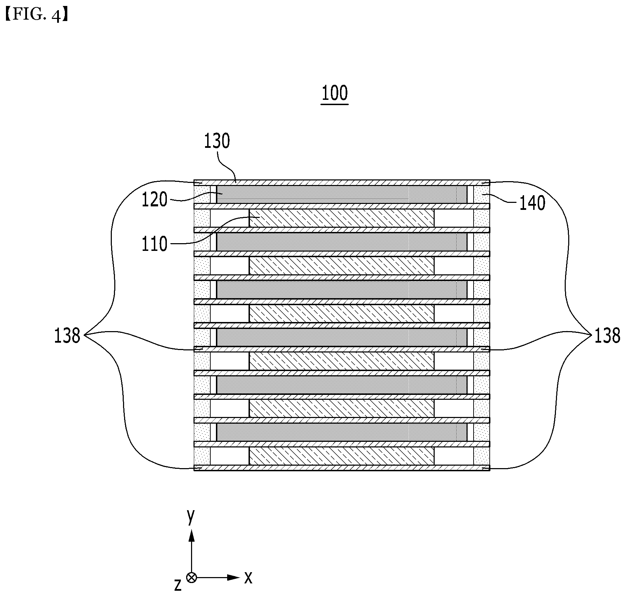

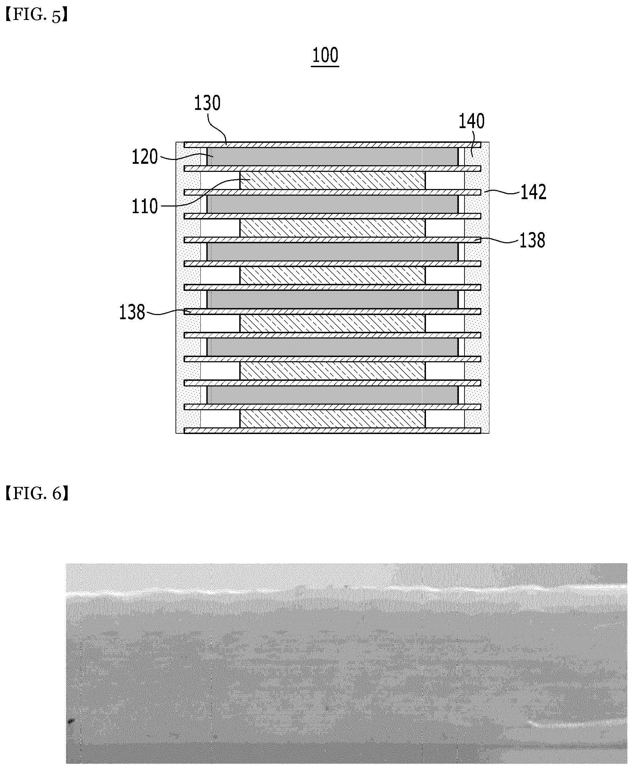

Figs. 4 and 5 are diagrams showing an electrode assembly according to an embodiment of the present disclosure.

Referring to Figs. 4 and 5, the electrode assembly 100 of the present embodiment is a power generation element capable of charging and discharging, which may include electrodes 110 and 120 and a separator 130. The electrodes 110 and 120 included in the electrode assembly 100 may include a cathode 110 and an anode 120, and the separator 130 is interposed between the electrodes 110 and 120, so that the electrode assembly 100 can have a structure in which cathode 110 / separator 130 / anode 120 are alternately stacked. Here, the positions of the cathode 110 and the anode 120 shown in Figs. 4 and 5 are shown for convenience, and the positions can be changed from each other.

Further, the electrode assembly 100 of the present embodiment includes the fixing member 140 formed on at least one (right or left) side surface or both (right and left) side surfaces. The electrode assembly 100 may include a fixing member 140 formed on a side surface of a cell stack in which the electrodes 110 and 120 and the separator 130 are alternately stacked. Here, the cell stack refers to a stacked body of the electrodes 110 and 120 and the separator 130 in the electrode assembly 100 of the present embodiment, and may not include the fixing member 140. Further, here, the side surface of the cell stack refers to the surface where the ends of the plurality of electrodes 110 and 120 and/or the separator 130 are exposed in the cell stack in which the electrodes 110 and 120 and the separator 130 are alternately stacked. In addition, the side surface of the cell stack may refer to one surface of the cell stack that extends long along the first, lengthwise direction (or: whole length direction) of the electrode assembly 100 (the Z-axis or lengthwise direction of Fig. 4) which is larger than the second, crosswise direction thereof. When manufacturing the electrode assembly 100, the size, in particular in the lengthwise direction and/or in the crosswise direction, of the separator 130 may be greater than the size of the electrodes 110 and 120. The lengthwise and/or crosswise, preferably the lengthwise, ends of the separator 130 may protrude beyond the ends of the electrodes 110 and 120. Specifically, in one direction (X-axis or crosswise direction in Fig. 4) of the electrode assembly 100, the separator 130 has a longer structure than the electrodes 100 and 120, so that the separator 130 includes a projection 138 protruding beyond the ends of the electrodes 110 and 120 on one, left or right, side thereof, or two mutually opposite projections 138.

Further, as mentioned below, when the electrode assembly 100 is formed through a zigzag stacking, the pillar section (which subsequently shall be referred to by way of example as a "bent part") of the separator 130 may protrude beyond the ends of the electrodes 110 and 120. Here, the end of the protruding separator 130 or the bent part of the composite zigzag-shaped separator 130 may be referred to as a 'projection 138'.

The fixing member 140 may be formed by applying an adhesive. The adhesive may include a component that is not readily dissolved in the electrolytic solution. An example of the adhesive used for the fixing member 140 may include PO, PUR, EVA, and/or rubber series. Further, another example may be a curable adhesive capable of natural curing, moisture curing, UV curing, and the like.

The fixing member 140 comes into contact with an projection 138 of the separator 130 that does not come into contact with the electrodes 110 and 120, so as to fix or rigidify the shape of the separator 130. The separator 130 and at least one other separator 130 adjacent thereto may be connected to each other by the fixing member 140. Multiple or even all separators 130 of the electrode assembly 100 can be connected using at least one fixing member 140.

The fixing member 140 may come into contact with the separator 130. At this time, the fixing member 140 may be formed between the separators 130 as shown in Fig. 4, and thus can formed so as to correspond to the projection 138 of the separator 130 and the position thereof.

It may be preferred that the fixing member 140 does not come into contact with the cathode 110. It has been found that in some embodiments, the fixing member 140 may disturb the flow of ions moving from the cathode 110 to the anode 120. Further, it may be preferred that the fixing member 140 does not come into contact with the anode 120. But as the anode 120 is not a direct charging region, and thus, the influence thereof may be less than the contact between the cathode 110 and the fixing member 140.

The fixing member 140 may be formed on all side surfaces of the electrode assembly 100, but may be preferably formed on only a part of the side surfaces. It has been found that in some embodiments, when the fixing member 140 is formed on the whole of the side surface of the electrode assembly 100, the fixing member 140 impedes the gas discharge of the electrode assembly 100 in the electrolytic solution impregnation or activation process of the electrodes 110 and 120.

In reference to the embodiments shown in the figures, surfaces facing in the lengthwise direction may be designated as a front surface or back surface. Surfaces facing in the crosswise direction may be designated as a left side surface or right side surface.

The fixing member 140 may be formed so as to cover the whole of one side surface of the electrode assembly 100, or may be formed so as to cover 70 to 80% of the side surface, particularly while covering the entire height of this side surface in the stacking direction. Here, the side surface of the electrode assembly 100 may have a 'height' formed through stacking. The side surface may have a first 'width' corresponding to the length of the long side (first side) or a second 'width' corresponding to the short side (second side) in the electrode assembly 100. For example, the fixing member 140 may be formed so as to cover 70 to 80% of the width, preferably the first width, of the side surface, preferably the first side surface, of the electrode assembly 100. The fixing member 140 may be configured so as not to cover the whole of the side surfaces of the electrode assembly 100, thereby capable of preventing the gas discharge of the electrode assembly 100 from being impeded by the fixing member 140 in the electrolytic solution impregnation or activation process of the electrodes 110 and 120.

The fixing member 140 may be formed on a surface where the long side of the separator 130 is located among the side surfaces of the electrode assembly 100. The fixing member 140 may be formed on the long side of the separator 130. It has been found that in some embodiments, the folding phenomenon or the like occurs more frequently on the long side of the separator 130 having a relatively longer length than on the short side. However, such an explanation does not completely exclude that the fixing member 140 can be formed on the short side of the separator 130. In another embodiment, as shown in FIG. 5, the fixing member 140 may be joined together across multiple levels in the stacking direction by including portions 142 thereof that extend around the lateralmost outer edges of the separator 130.

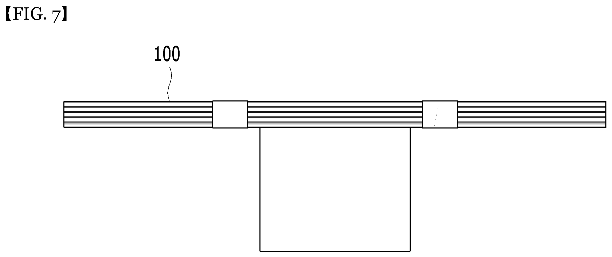

Fig. 6 is a photograph that has been taken from a side surface of the electrode assembly. Fig. 7 is a diagram that illustrates a test related to the stiffness of the electrode assembly.

Referring to Figs. 6 and 7, the fixing member 140 can serve to prevent a phenomenon in which the end of the separator 130 is folded and supplement the stiffness of the electrode assembly 100.

Specifically, it was found that when the fixing member 140 is formed on the side surface of the electrode assembly 100, the folding phenomenon appearing in the region A of Fig. 2 described above is overcome. Further, even in the same test as that performed in Fig. 3, it could be seen that a phenomenon in which a part of the electrode assembly 100 is bent does not occur in Fig. 7, and thus, the minimum stiffness required for the electrode assembly 100 is secured by the fixing member 140. By supplementing the stiffness of the electrode assembly 100 in this way, it is possible to prevent excessive deformation of the electrode assembly 100 when an external force is applied.

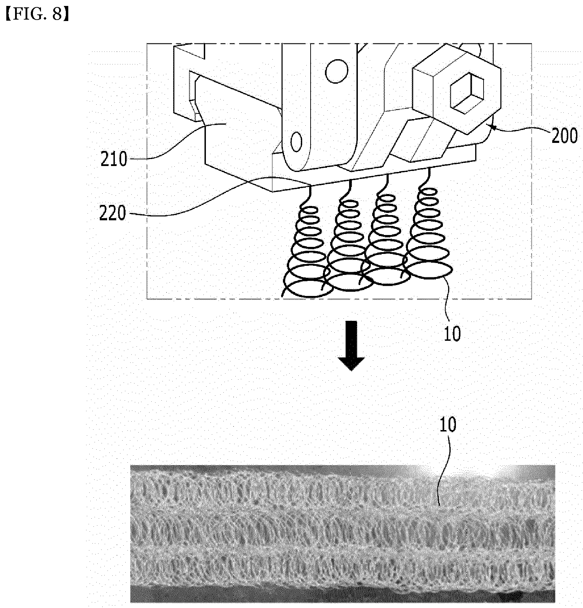

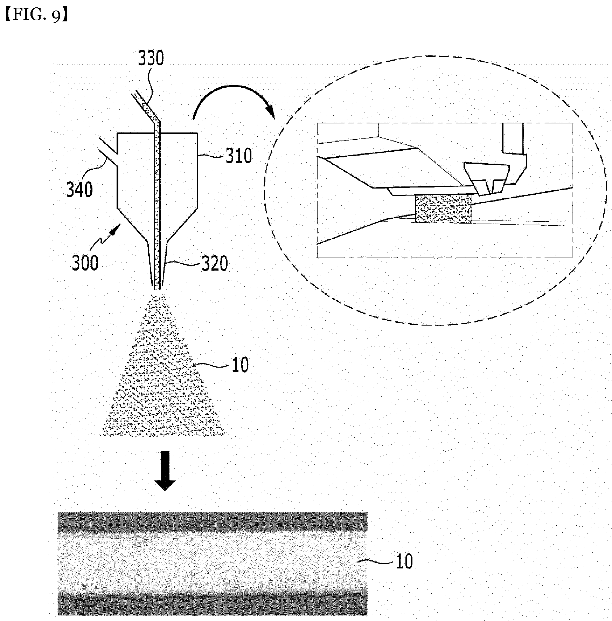

Fig. 8 is a view showing an example of a device for applying an adhesive to the electrode assembly and the applied adhesive. Fig. 9 is a view illustrating an apparatus for applying an adhesive to an electrode assembly and another example of the applied adhesive.

Referring to Fig. 8, 10, and 11, the fixing member 140 of the present invention may be formed as a network of strands 144 of the adhesive material. The network of strands may have a form similar to a web structure. The network of strands 144 include multiple nodes or crossing locations 146 where a strand 144 of adhesive material intersects or crosses over another strand 144 of material. The web structure is realized by a patterning method. A patterning method may be realized using one or more, for example four, printing units being operated while over the side surface to be provided with the fixing member according to a random or predetermined pattern. Here, the patterning method may mean applying an adhesive so that the adhesive 10 applied to the target position has a predetermined pattern. While the illustrated pattern is a pigtail pattern, other patterns may likewise be applied.

The adhesive application device 200 based on the patterning method may include a housing 210 and a nozzle 220. The adhesive 10 may be supplied from the outside of the device 200 and housed in the housing 210, and the adhesive 10 that has passed through the nozzle 220 can be discharged in the form of a line. The applied adhesive 10 may have a specific pattern according to the movement of the nozzle 220. As an example, the adhesive 10 is spirally applied to the bottom of Fig. 8 and thus, it is shown that a large number of circular shapes have an overlapping web structure. Such a web structure may be referred to as a pig tail shape or a pig tail pattern.

Referring to Fig. 9, the fixing member 140 according to the present embodiment may be formed by a surface application method. Here, the surface application method may mean applying an adhesive with a high density so that the adhesive 10 is applied to the target position without gaps.

The adhesive application device 300 based on the surface application method can apply the adhesive 10 so that the adhesive 10 covers the whole of the target portion as shown in the below photograph of Fig. 9. The adhesive application device 300 by the surface coating method can apply the adhesive through a spray, slot, or other method. In one example, the adhesive application device 300 based on the surface application method may include a housing 310, a nozzle 320, and a tube 330 through which the adhesive 10 is supplied into the housing 310, and an air tube 340 for injecting a compressed air when the adhesive 10 is sprayed through the nozzle 320 connected to the tube 330.

Meanwhile, since the adhesive application device 300 based on the surface application method of Fig. 9 uses a compressed air, or the like, there is a fear that a scattering phenomenon of the adhesive 10 may occur at the time of spraying the adhesive 10. Further, when the thickness of the fixing member 140 is to be formed thick, there is a disadvantage in that the uniformity of the fixing member 140 is deteriorated.

Meanwhile, since the adhesive application device 200 of Fig. 8 discharges the adhesive 10 in the form of a line, the scattering phenomenon of the adhesive by air or the like can be minimized, and the contamination of the device can be minimized. Further, the device 200 of Fig. 8 adjusts the distance between the lines so that the density and thickness of the fixing member 140 can be relatively freely adjusted. The device 200 of Fig. 8 applies the adhesive 10 in a certain pattern, so that the adhesive 10 can be applied more uniformly than the adhesive application device 300 of Fig. 9 even when the thickness of the fixing member 140 is to be formed thick.

The device 200 of Fig. 8 can minimize the thickness of the fixing member 140 as compared with the device 300 of Fig. 9. Specifically, the thickness of the fixing member 140 formed through the device 200 of Fig. 8 is about 100 µm or more, whereas the thickness of the fixing member 140 formed through the device 300 of Fig. 9 may be about 200 µm or more. The device 200 of Fig. 8 applies the adhesive 10 in the form of a line as described above.

The thickness of the fixing member 140 formed on the electrode assembly 100 can be variously set according to a design. For example, considering the size of the space between the electrode assembly 100 and the battery case in the battery cell, the thickness of the fixing member 140 can be designed to be less than or equal to that size. As a specific example, when the electrode assembly 100 is incorporated in the battery case in a state where the fixing member 140 is not formed, the separation distance between the electrode assembly 100 and the battery case may be about 600 µm. In this case, the thickness of the fixing member 140 formed on the electrode assembly 100 may be 600 µm or less, 500 µm or less, 400 µm or less, 300 µm or less, or 200 µm or less. Further, the thickness of the fixing member 140 formed on the electrode assembly 100 may be 100 to 600 µm, 100 to 500 µm, 100 to 400 µm, 100 to 300 µm, or 100 to 200 µm. At this time, the fixing member 140 may be formed by repeatedly stacking lines by the device 200 of Fig. 8.

The adhesive 10 provided through the adhesive application device may have a predetermined temperature. The adhesive application device adjusts the temperature of the adhesive 10 so that the adhesive 10 is easily applied. The operating temperature of the device 200 of Fig. 8 is 110°C, and the temperature of the adhesive 10 discharged from the device 200 may be in the range of 40°C to 50°C. The operating temperature of the device 300 of Fig. 9 is 160°C, and the temperature of the adhesive 10 discharged from the device 200 may be the level of 60°C to 70°C. If the temperature of the adhesive 10 is high, the separator 130 is highly likely to contract.

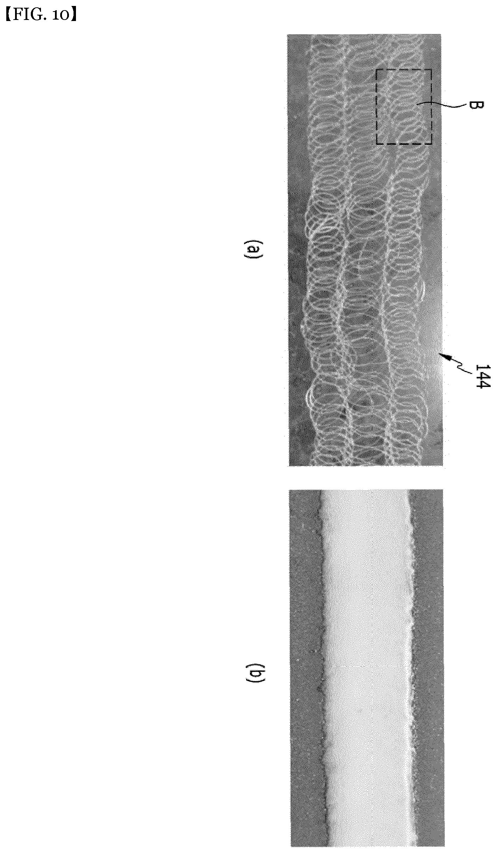

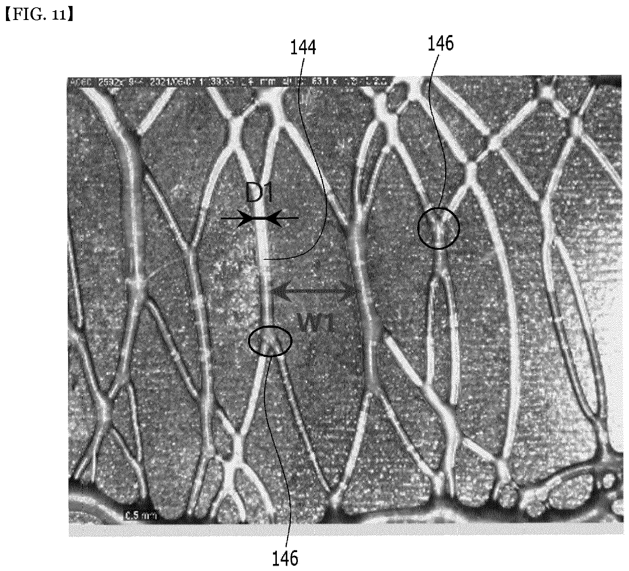

Fig. 10 is a photograph comparing the adhesives applied using the devices of Figs. 8 and 9. Fig. 11 is an enlarged photograph of a region B of Fig. 10.

Referring to Figs. 10 and 11, the application shape of the adhesive according to the devices of Figs. 8 and 9 can be compared. The corresponding shape may be the shape of the fixing member 140 applied to the side surface of the electrode assembly 100.

Fig. 10(a) is based on a patterning method, and may be formed by the device 200 of Fig. 8. In Fig. 10(a), the adhesive 10 discharged in a linear shape is repeated. For example, as shown, the linear shape is repeated in a spiral shape or a circular shape to form a pattern. The fixing member 140 formed by the patterning method may have a pattern in which at least two lines intersect. A structure, particularly a planar structure, formed by one or more lines consisting of line sections, some of which intersect is designated as a web structure. The fixing member 140 formed by the patterning method may include a plurality of openings. The line width of the adhesive 10 by the patterning method may be 20 to 100 µm, and the distance between the lines may be 100 to 800 µm.

Referring to Fig. 11, the fixing member 140 has a pig tail pattern. The first line width d1 is 50 µm, and the first line distance w1 is 600 µm.

Meanwhile, Fig. 10(b) is based on a surface application method, and may be formed by the device 300 of Fig. 9. In Fig. 10(b), the gap between the adhesives 10 may not be present and it is applied so as to form one singular surface. In the embodiment show in Fig. 10(b), openings are not formed in the fixing member 140.

Meanwhile, since the fixing member 140 of the present embodiment is formed on the side surface of the electrode assembly 100, the fixing member 140 can prevent the electrolytic solution absorbed through the side surface of the electrode assembly 100 from coming into contact with the electrodes 110 and 120. The fixing member 140 may be formed to minimize any decrease in absorption of the electrolytic solution.

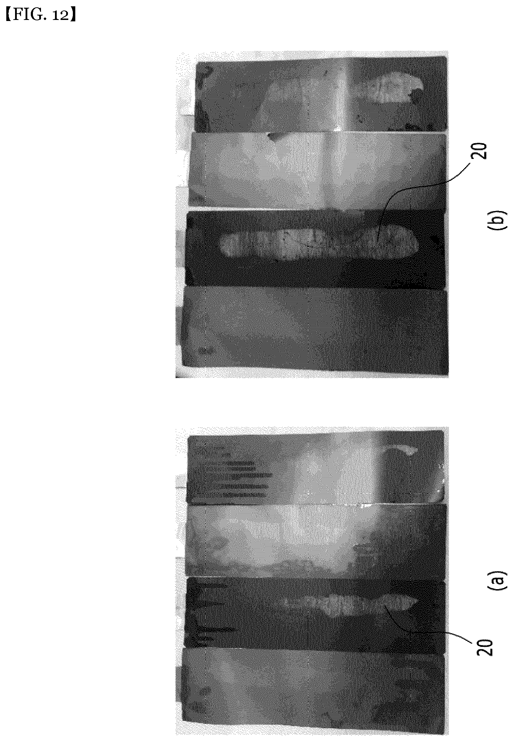

Fig. 12 is a photograph of a test related to the wettability of the electrode assembly to which the processes of Figs. 8 and 9 are applied. Specifically, Fig. 12 is obtained by impregnating the electrode assembly 100 having the fixing member 140, formed through the processes of Figs. 8 and 9, with the electrolytic solution, followed by disassembling. A section in which the electrolytic solution is not absorbed in the electrodes 110 and 120 as shown in the photograph can be designated as a non-wetting region 20, and based on this the wettability of the electrodes 110 and 120 with respect to the electrolytic solution and any reduction thereof through the fixing member 140 may be assumed. Here, as the non-wetting region 20 is smaller, it may mean that the contact between the electrodes 110 and 120 and the electrolytic solution are sufficient.

Referring to Fig. 12, the electrodes 110 and 120 of Fig. 12(a) to which the patterning method of Fig. 8 is applied have a smaller non-wetting region 20 than the electrodes 110 and 120 of Fig. 12 (b) to which the surface application method of Fig. 9 is applied. In other words, the fixing member 140 formed by Fig. 8 may not interfere with the absorption of the electrolytic solution than the fixing member 140 formed by Fig. 9.

Since the pattern application method of Fig. 8 has a pattern in which a plurality of lines intersect, it may be formed so as to include a plurality of openings in the fixing member 140. When the electrode assembly 100 is impregnated with the electrolytic solution, the electrolytic solution can be absorbed into the inside of the electrode assembly 100 through the opening, whereby the fixing member 140 by the pattern application method can suppress a substantial decrease in penetration of the electrolytic solution. If the electrolytic solution is not well absorbed by the electrodes 110 and 120, the output characteristics of the electrode assembly 100 can be deteriorated. Therefore, even when the fixing member 140 is formed by the surface application method of Fig. 9, the absorption rate of the electrolytic solution can be increased by partially forming the fixing member 140 on the side surface of the electrode assembly 100. However, in the case of partially forming the fixing member 140 in this way, since the stiffness of the electrode assembly 100 can be reduced as shown in Fig. 3, the application position and application level of the fixing member 140 may have to be designed strictly.

Next, an electrode assembly according to another embodiment of the present disclosure will be described.

Prior to the description, it should be clarified that the electrode assembly of the present embodiment is the same as the above-mentioned electrode assembly except that the shape of the cell stack is different. Therefore, unless otherwise stated, the electrode assembly according to the present embodiment may be described as including all the contents related to the electrode assembly of Figs. 4 to 12 described above.

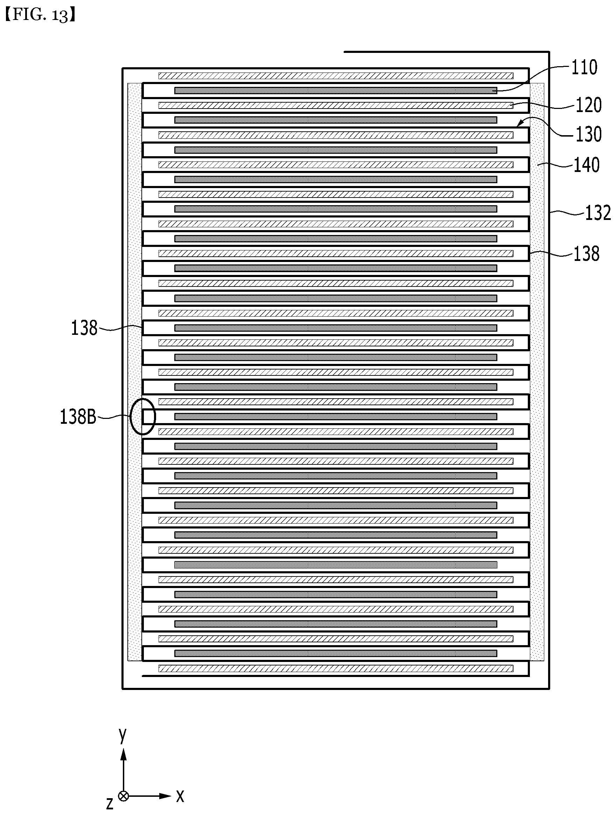

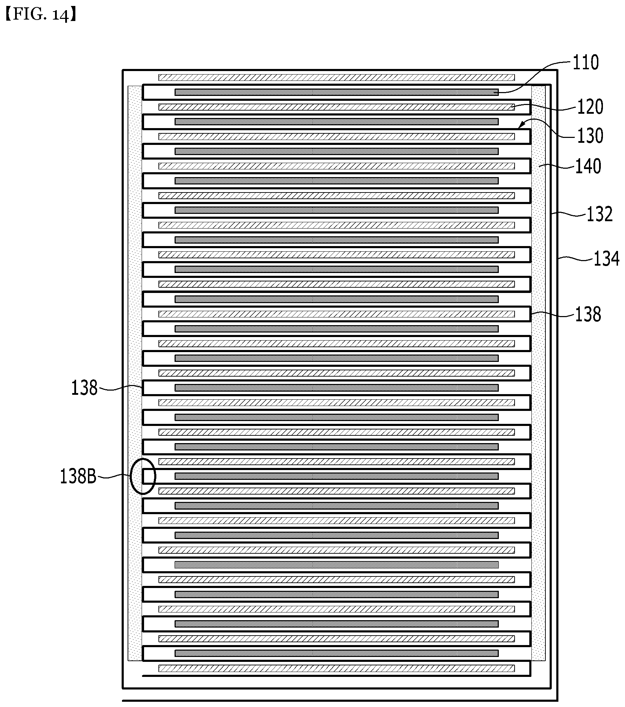

Figs. 13 and 14 are diagrams showing an electrode assembly according to another embodiment of the present disclosure.

Referring to Figs. 13 and 14, the electrode assembly 100 of the present embodiment may include a cell stack in which a cathode 110 / a separator 130 / an anode 120 are alternately stacked and finishing separators 132 and 134 surrounding the side surface of the cell stack.

Here, the separator 130 has a zigzag shape formed by bending a rectangular separator sheet, and the separator 130 bent in a zigzag may be interposed between the cathode 110 and the anode 120. After the zigzag stacking is completed, the separator 130 can wrap the side surface of the cell stack at least once via the finishing separators 132 and 134, so that the side surface of the cell stack can be finished. At this time, the positions of the cathode 110 and the anode 120 shown in Figs. 13 and 14 are shown for convenience, and the positions can be changed from each other.

The fixing member 140 can be formed on a side surface of the cell stack. The fixing member 140 comes into contact with the projection 138 of the separator 130 and connects the projection 138, so that the shape of the separator 130 can be fixed. The fixing member 140 connects the bent part 138B of the separator 130, that is, the bent part 138B of the separator 130, so that the overall shape of the separator 130 can be fixed. The overall shape of the cell stack including the separator 130 is fixed by the fixing member 140, and can ensure minimum stiffness.

The fixing member 140 may be formed on all side surfaces of the cell stack as described above, but can be formed on both side surfaces where the bent separation film 130 is located as shown in Figs. 13 and 14. Further(not shown in Figs. 13 and 14), it can be formed on the other side (particularly the front side or back side) of the cell stack. However, in the process of impregnating or activating the electrodes 110 and 120 with an electrolytic solution, since the discharge of gas from the electrode assembly 100 can be disturbed by the fixing member 140, the position of the fixing member 140 needs to be properly designed, and it may not be desirable to be formed so as to cover all side surfaces of the cell stack. Further, the fixing member 140 may be formed so as to cover the whole of one side surface of the electrode assembly 100, or may be formed so as to cover 70 to 80% of the side surface of the electrode assembly 100.

After the fixing member 140 is formed on the cell stack, finishing separators 132 and 134 may be formed on the outside of the fixing member 140. The finishing separators 132 and 134 may wrap the side surface of the cell stack on which the fixing member 140 is formed. At this time, the finishing separator 132 may be finished after surrounding one circle around the cell stack as a whole, and thus wrapping the side surface of the cell stack once. Further, the finishing separators 132 and 134 are finished after surrounding two circles or more around the cell stack as a whole, and thus wrapping the side surface of the cell stack twice or more as shown in Fig. 14.

Meanwhile, without forming the finishing separators 132 and 134 in the electrode assembly 100, the side surface of the cell stack can be finished by attaching an adhesive means such as heat sealing or adhesive tape, and the finishing method may be implemented by changing in various ways in addition to the above-mentioned embodiments.

Next, a method of manufacturing an electrode assembly according to an embodiment of the present disclosure will be described.

The manufacturing method (S1000) of the electrode assembly of the present embodiment may include a step of forming a cell stack in which the electrodes 110 and 120 and the separator 130 are alternately stacked (S1100), a step of applying the adhesive 10 to the side surface of the cell stack (S1200) and a step of forming the fixing member 140 for fixing the separator 130 (S1300).

Here, as the step of forming the cell stack (S1100), any known method can be used as long as the electrode and the separator are stacked in the order of the cathode 110, the separator 130, the anode 120 and the separator 130 or in the order of the anode 120, the separator 130, the cathode 110 and the separator 130. For example, the cell stack can be manufactured in a stacked type as shown in Figs. 4 and 5, or may be manufactured in a zig-zag shape as shown in Figs. 13 and 14.

Here, in the step of applying the adhesive to the side surface of the cell stack (S1200), the device 200 of Fig. 8 can be used, or the application device 300 of Fig. 9 can be used. When the device 200 of Fig. 8 is used, the step (S1200) may include a step of determining the application pattern of the adhesive 10, and/or a step of moving the nozzle 220 to the determined pattern to apply the adhesive in a pattern. Here, the step of determining the application pattern of the adhesive 10 may be performed before the step of forming the cell stack (S1100).

Since the adhesive 10 is applied in a viscous state, it may be desirable to allow the shape of the adhesive 10 to be fixed by removing the solvent or moisture in the adhesive. In this case, the step of forming the fixing member 140 ( S1300 ) may include a step of drying the adhesive 10. Further, depending on the nature of the adhesive 10, the adhesive 10 can be solidified by heat curing or UV curing, and in such a case, the step of forming the fixing member 140 (S1300) may include a step of curing the adhesive 10.

Meanwhile, when the present embodiment is a method of manufacturing the zigzag type electrode assembly 100 shown in Figs. 13 and 14, the above-mentioned method may further include a step of finishing the side surface of the cell stack (S1400). Through this step, the finishing separators 132 and 134 may be formed on the side surface of the cell stack. The finishing separators 132 and 134 may be finished after wrapping the side surface of the cell stack at least once. The finishing separators 132 and 134 may wrap the side surface of the cell stack once as shown in Fig. 13, and the side surface of the cell stack may be wrapped twice or more as shown inf Fig. 14.

Further, the method of manufacturing the electrode assembly 100 according to the present embodiment may further include a step of pressing along one direction (X-axis direction) toward the side surface of the cell stack, after the formation of the finishing separators 132 and 134.

When these steps are added, the finishing separators 132 and 134 and the fixing member 140 are adhered to each other, so that the overall stiffness of the electrode assembly can be further improved. In addition, the finishing separators 132 and 134 have an effect of more strongly winding the electrode assembly. Accordingly, it is possible to prevent the battery cell from being bent.

Meanwhile, the electrode assembly 100 of the present embodiment described above is housed in a cell case together with an electrolytic solution and can be provided as a battery cell.

A battery cell according to an embodiment of the present disclosure may include an electrode assembly 100 in which a plurality of electrodes and a plurality of separators are alternately stacked, electrode leads connected to electrode tabs extending from a plurality of electrodes, and a cell case for sealing the electrode assembly in a state where one end of the electrode lead protrude.

On the other hand, the above-mentioned battery cell can be stacked in one direction to form a battery cell stack, and a battery pack can be formed together with a battery management system (BMS) and/or a cooling device that is modularized into a battery module and manages the temperature or voltage of the battery. The battery pack can be applied to various devices. For example, the device to which the battery pack is applied may be a vehicle means such as an electric bicycle, an electric vehicle, or a hybrid vehicle, but the present disclosure is not limited thereto, and the battery pack according to the present invention can be used for various devices in addition to the above illustrations, which also falls within the scope of the appended claims.

### [Description of Reference Numerals]

10: adhesive
100: electrode assembly
110: cathode
120: anode
130: separator
132: finishing separator
134: finishing separator
138: projection
140: fixing member
200: application device
210: housing
220: nozzle
300: application device
310: housing
320: nozzle
330: tube
340: tube
X: crosswise direction
Y: stacking direction
Z: lengthwise direction

## Claims

1. An electrode assembly (100) in which electrodes (110, 120), in particular electrode sheets, and separators (130), in particular separator sheets, are alternately stacked in a stacking direction,
wherein in at least one lengthwise direction (Z) and/or crosswise direction (X) of the electrode assembly (100), the separators (130) have a larger extension than the electrode (110, 120), in particular the immediately adjacent electrode or electrodes (110, 120), whereby the separators (130), preferably each, include at least one projection (138) that protrudes beyond the electrode (110, 120) in the lengthwise direction (Z) and/or crosswise direction (X), and
wherein at least one fixing member (140) attaching the projections (138) of the separators (130) adjacent to each other along the stacking direction (Y) is arranged among a plurality of the separators (130),
wherein the fixing member (140) has a web structure.

2. The electrode assembly (100) of claim 1, wherein:
the web structure comprises at least one line consisting of a plurality of line sections, in particular a plurality of lines, wherein the web structure includes at least one intersection formed by two or more-line sections.

3. The electrode assembly (100) according to claim 2, wherein:
the lines of the web structure have a line width of at least 10 µm, in particular at least 20 µm, and/or no more than 200 µm, in particular no more than 100 µm; and/or wherein:
the distance between mutually adjacent lines of the web structure is at least 100 µm and/or no more than 800 µm.

4. The electrode assembly (100) according to one of the preceding claims, wherein:
the fixing member (140) includes a plurality of openings, wherein in particular the openings define a clearance of no more than 1000 µm, in particular no more than 800 µm, preferably no more than 400 µm.

5. The electrode assembly (100) according to one of the preceding claims, wherein:
the electrode assembly (100) has a first, in particular lengthwise, dimension larger than a second, in particular crosswise, dimension, and a side surface defined in the stacking direction (Y) and the first direction, wherein
the fixing member (140) covers the side surface at least partially, preferably completely, in the stacking direction (Y); and/or wherein
the fixing member (140) covers the side surface at least partially, preferably completely, in the first direction.

6. The electrode assembly (100) according to one of the preceding claims, further comprising: at least two electrode tabs protruding from the electrodes (110, 120) in the first direction.

7. The electrode assembly (100) according to one of the preceding claims, wherein:
the separator (130) has a zigzag shape.

8. The electrode assembly (100) according to one of the preceding claims, wherein:
the fixing member (140) has an inside facing towards the electrodes (110, 120) and an outside facing away from the electrodes (110, 120), wherein
a finishing separator (132, 134) is located on the outside of the fixing member (140), wherein preferably the finishing separator (132, 134) is attached to the outside of the fixing member (140).

9. The electrode assembly (100) according to one of the preceding claims, wherein:
the separators (130), in particular the separator sheets, have mutually opposite first, in particular lengthwise, edges and mutually opposite second, in particular crosswise, edges, wherein the first edges are longer than the second edges, and wherein
the fixing member (140) is attached to separators (130) adjacent to each other along the stacking direction (Y) along at least one of their respective first edges.

10. The electrode assembly (100) according to one of the preceding claims, wherein:
the fixing member (140) covers at least 25 %, in particular at least 50 %, preferably at least 70 %, and/or the whole, in particular no more than 90%, preferably no more than 80%, of one, in particular first, side surface of the electrode assembly (100).

11. The electrode assembly (100) according to one of the preceding claims, wherein:
the electrodes (110, 120) comprise at least one cathode (110) and at least one anode (120), wherein
the at least one cathode (110) is distanced from the fixing member (140) and/or wherein
the at least one anode (120) is distanced from the fixing member (140), wherein preferably
the electrodes (110, 120) are distanced from the fixing member (140).

12. The electrode assembly (100) according to one of the preceding claims, wherein:
the fixing member (140) has a thickness of at least 50 µm, in particular at least 100 µm or 200 µm, and/or no more than 1000 µm, in particular no more than 800 µm, preferably no more than 600 µm.

13. The electrode assembly (100) according to one of the preceding claims, wherein:
the fixing member (140) covers the projections (138) of the separators (130); or. wherein
the fixing member (140) is flush with the projections (138) of the separators (130).

14. The electrode assembly (100) according to one of the preceding claims, wherein:
the fixing member (140) comprises an adhesive (10).

15. A battery cell comprising the electrode assembly (100) according to one of the preceding claims.

## Patentansprüche

1. Elektrodenanordnung (100), bei der Elektroden (110, 120), insbesondere Elektrodenfolien, und Separatoren (130), insbesondere Separatorfolien, alternierend in einer Stapelrichtung gestapelt sind
wobei die Separatoren (130) zumindest in einer Längsrichtung (Z) und/oder einer Querrichtung (X) der Elektrodenanordnung (100) eine größere Ausdehnung als die Elektrode (110, 120), insbesondere die unmittelbar benachbarte(n) Elektrode(n) (110, 120), aufweisen, wobei die Separatoren (130) vorzugsweise jeweils zumindest einen Vorsprung (138) aufweisen, der über die Elektrode (110, 120) in der Längsrichtung (Z) und/oder der Querrichtung (X) hinausragt, und
wobei zumindest ein Befestigungselement (140), das die Vorsprünge (138) der in der Stapelrichtung (Y) benachbarten Separatoren (130) befestigt, zwischen einer Vielzahl der Separatoren (130) angeordnet ist,
wobei das Befestigungselement (140) eine Netzstruktur aufweist

2. Die Elektrodenanordnung (100) nach Anspruch 1, wobei:
die Netzstruktur zumindest eine Linie umfasst, die aus einer Vielzahl von Linienabschnitten besteht, insbesondere eine Vielzahl von Linien, wobei die Netzstruktur zumindest eine von zwei oder mehr Linienabschnitten gebildete Kreuzung aufweist.

3. Die Elektrodenanordnung (100) nach Anspruch 2, wobei:
die Linien der Netzstruktur eine Linienbreite von zumindest 10 µm, insbesondere zumindest 20 µm, und/oder nicht mehr als 200 µm, insbesondere nicht mehr als 100 µm, aufweisen; und/ oder wobei:
der Abstand zwischen benachbarten Linien der Netzstruktur zumindest 100 µm und/oder nicht mehr als 800 µm beträgt.

4. Elektrodenanordnung (100) nach einem der vorstehenden Ansprüche, wobei:
das Befestigungselement (140) eine Vielzahl von Öffnungen aufweist, wobei insbesondere die Öffnungen eine Weite von nicht mehr als 1000 µm, insbesondere nicht mehr als 800 µm, vorzugsweise nicht mehr als 400 µm definieren.

5. Elektrodenanordnung (100) nach einem der vorstehenden Ansprüche, wobei:
die Elektrodenanordnung (100) hat erste Abmessung, insbesondere in Längsrichtung, die größer ist als eine zweite Abmessung, insbesondere in Querrichtung, und eine Seitenfläche, die in der Stapelrichtung (Y) und der ersten Richtung definiert ist,
das Befestigungselement (140) die Seitenfläche zumindest teilweise, vorzugsweise vollständig, in der Stapelrichtung (Y) bedeckt; und/oder
das Befestigungselement (140) die Seitenfläche zumindest teilweise, vorzugsweise vollständig, in der ersten Richtung bedeckt.

6. Elektrodenanordnung (100) nach einem der vorstehenden Ansprüche, ferner umfassend:
zumindest zwei Elektrodenlaschen, die von den Elektroden (110, 120) in der ersten Richtung vorstehen.

7. Elektrodenanordnung (100) nach einem der vorstehenden Ansprüche, wobei:
der Separator (130) eine Zickzackform hat.

8. Elektrodenanordnung (100) nach einem der vorstehenden Ansprüche, wobei:
das Befestigungselement (140) eine den Elektroden (110, 120) zugewandte Innenseite und eine von den Elektroden (110, 120) abgewandte Außenseite aufweist,
ein Abschlussseparator (132, 134) an der Außenseite des Befestigungselements (140) angeordnet ist, wobei vorzugsweise der Abschlussseparator (132, 134) an der Außenseite des Befestigungselements (140) befestigt ist.

9. Elektrodenanordnung (100) nach einem der vorstehenden Ansprüche, wobei:
die Separatoren (130), insbesondere die Separatorfolien, einander gegenüberliegende erste, insbesondere längsgerichtete, Ränder und einander gegenüberliegende zweite, insbesondere quergerichtete, Ränder aufweisen, wobei die ersten Ränder länger sind als die zweiten Ränder, und
das Befestigungselement (140) an den entlang der Stapelrichtung (Y) nebeneinander liegenden Separatoren (130) entlang zumindest einer ihrer jeweiligen ersten Kanten befestigt ist.

10. Elektrodenanordnung (100) nach einem der vorstehenden Ansprüche, wobei:
das Befestigungselement (140) zumindest 25 %, insbesondere zumindest 50 %, vorzugsweise zumindest 70 %, und/oder die gesamte, insbesondere nicht mehr als 90 %, vorzugsweise nicht mehr als 80 %, einer, insbesondere ersten, Seitenfläche der Elektrodenanordnung (100) bedeckt.

11. Elektrodenanordnung (100) nach einem der vorstehenden Ansprüche, wobei:
die Elektroden (110, 120) zumindest eine Kathode (110) und zumindest eine Anode (120)
umfassen, wobei
die zumindest eine Kathode (110) von dem Befestigungselement (140) beabstandet ist und/oder wobei
die zumindest eine Anode (120) von dem Befestigungselement (140) beabstandet ist, wobei vorzugsweise
die Elektroden (110, 120) sind von dem Befestigungselement (140) beabstandet.

12. Elektrodenanordnung (100) nach einem der vorstehenden Ansprüche, wobei:
das Befestigungselement (140) eine Dicke von zumindest 50 µm, insbesondere von zumindest 100 µm oder 200 µm, und/oder nicht mehr als 1000 µm, insbesondere nicht mehr als 800 µm, vorzugsweise nicht mehr als 600 µm, aufweist.

13. Elektrodenanordnung (100) nach einem der vorstehenden Ansprüche, wobei:
das Befestigungselement (140) die Vorsprünge (138) der Separatoren (130) bedeckt; oder wobei
das Befestigungselement (140) mit den Vorsprüngen (138) der Trennwände (130) bündig ist.

14. Elektrodenanordnung (100) nach einem der vorstehenden Ansprüche, wobei:
das Befestigungselement (140) einen Klebstoff (10) enthält.

15. Batteriezelle mit der Elektrodenanordnung (100) nach einem der vorstehenden Ansprüche.

## Revendications

1. Ensemble électrodes ( (100) dans lequel des électrodes (110, 120), en particulier des feuilles d'électrode, et des séparateurs (130), en particulier des feuilles de séparateur, sont empilés en alternance dans une direction d'empilement,
dans lequel dans soit la direction longitudinale (Z) et/soit la direction transversale (X) de l'ensemble électrodes (100), les séparateurs (130) ont une extension plus grande que l'électrode (110, 120), en particulier l'électrode ou les électrodes immédiatement adjacentes (110, 120), grâce à quoi les séparateurs (130) incluent, chacun de préférence, une ou plusieurs saillies (138) qui sont en saillie au-delà de l'électrode (110, 120) dans la direction longitudinale (Z) et/ou la direction transversale (X), et
dans lequel un ou plusieurs éléments de fixation (140) fixant les saillies (138) des séparateurs (130) adjacents l'un à l'autre le long de la direction d'empilement (Y) sont agencés parmi une pluralité des séparateurs (130),
dans lequel l'élément de fixation (140) a une structure en réseau.

2. Ensemble électrodes (100) selon la revendication 1, dans lequel :
la structure en réseau comprend une ou plusieurs lignes constituées d'une pluralité de sections de ligne, en particulier une pluralité de lignes, dans lequel la structure en réseau inclut une ou plusieurs intersections formées par deux sections de ligne ou plus.

3. Ensemble électrodes (100) selon la revendication 2, dans lequel :
les lignes de la structure en réseau ont une largeur de ligne égale ou supérieure à 10 µm, en particulier égale ou supérieure à 20 µm, et/ou égale ou inférieure à 200 µm, en particulier égale ou inférieure à 100 µm ; et/ou dans lequel :
la distance entre des lignes mutuellement adjacentes de la structure en réseau est égale ou supérieure à 100 µm et/ou égale ou inférieure à 800 µm.

4. Ensemble électrodes (100) selon l'une quelconque des revendications précédentes, dans lequel :
l'élément de fixation (140) inclut une pluralité d'ouvertures, dans lequel en particulier les ouvertures définissent un espace égal ou inférieur à 1000 µm, en particulier égal ou inférieur à 800 µm, de préférence égal ou inférieur à 400 µm.

5. Ensemble électrodes (100) selon l'une quelconque des revendications précédentes, dans lequel :
l'ensemble électrodes (100) a une première dimension, en particulier longitudinale, supérieure à une deuxième dimension, en particulier transversale, et une surface latérale définie dans la direction d'empilement (Y) et la première direction, dans lequel
l'élément de fixation (140) couvre la surface latérale au moins partiellement, de préférence complètement, dans la direction d'empilement (Y) ; et/ou dans lequel
l'élément de fixation (140) couvre la surface latérale au moins partiellement, de préférence complètement, dans la première direction.

6. Ensemble électrodes (100) selon la revendication 6, comprenant en outre :
au moins deux languettes d'électrode saillant des électrodes (110, 120) dans la première direction.

7. Ensemble électrodes (100) selon l'une quelconque des revendications précédentes, dans lequel :
le séparateur (130) a une forme en zigzag.

8. Ensemble électrodes (100) selon l'une quelconque des revendications précédentes, dans lequel :
l'élément de fixation (140) a une face intérieure tournée vers les électrodes (110, 120) et une face extérieure opposée aux électrodes (110, 120), dans lequel
un séparateur de finition (132, 134) est situé sur la partie extérieure de l'élément de fixation (140), dans lequel, de préférence, le séparateur de finition (132, 134) est fixé à la partie extérieure de l'élément de fixation (140).

9. Ensemble électrodes (100) selon l'une quelconque des revendications précédentes, dans lequel :
les séparateurs (130), en particulier les feuilles de séparateur, ont des premiers bords opposés mutuellement, en particulier longitudinalement, et des deuxièmes bords opposés mutuellement, en particulier transversalement, dans lequel les premiers bords sont plus longs que les deuxièmes bords, et dans lequel
l'élément de fixation (140) est fixé à des séparateurs (130) adjacents l'un à l'autre le long de la direction d'empilement (Y) le long d'un ou plusieurs de leurs premiers bords respectifs.

10. Ensemble électrodes (100) selon l'une quelconque des revendications précédentes, dans lequel :
l'élément de fixation (140) couvre au moins 25 %, en particulier au moins 50 %, de préférence au moins 70 %, et/ou la totalité, en particulier au moins 90 %, de préférence au moins 80 %, de, en particulier, une première surface latérale de l'ensemble électrodes (100).

11. Ensemble électrodes (100) selon l'une quelconque des revendications précédentes, dans lequel :
les électrodes (110, 120) comprennent une ou plusieurs cathode (110) et une ou plusieurs anodes (120), dans lequel
la ou les cathodes (110) sont à distance de l'élément de fixation (140) et/ou dans lequel
la ou les anodes (120) sont à distance de l'élément de fixation (140), dans lequel, de préférence
les électrodes (110, 120) sont à distance de l'élément de fixation (140).

12. Ensemble électrodes (100) selon l'une quelconque des revendications précédentes, dans lequel :
l'élément de fixation (140) a une épaisseur égale ou inférieure à 50 µm, en particulier égale ou supérieure à 100 µm ou 200 µm, et/ou égale ou inférieure à 1000 µm, en particulier égale ou inférieure à 800 µm, de préférence égale ou inférieure à 600 µm.

13. Ensemble électrodes (100) selon l'une quelconque des revendications précédentes, dans lequel :
l'élément de fixation (140) couvre les saillies (138) des séparateurs (130) ; ou, dans lequel
l'élément de fixation (140) est de niveau avec les saillies (138) des séparateurs (130).

14. Ensemble électrodes (100) selon l'une quelconque des revendications précédentes, dans lequel :
l'élément de fixation (140) comprend un adhésif (10).

15. Cellule de batterie comprenant l'ensemble électrodes (100) selon l'une quelconque des revendications précédentes.
